# EUROPÄISCHE PATENTSCHRIFT

(11) **EP 2 796 780 B1**
(45) Veröffentlichungstag und Bekanntmachung des Hinweises auf die Patenterteilung: **12.10.2016**
(21) Anmeldenummer: 14165813.8
(22) Anmeldetag: 24.04.2014
(51) Int. Cl.: F21V 14/06, F21V 8/00, F21Y 115/10, F21Y 113/00

(54) **Leuchte mit einstellbarer Lichtabstrahlcharakteristik**
Luminaire with adjustable light emitting characteristics
Luminaire doté d'une caractéristique de rayonnement lumineux réglable

(30) Priorität: 26.04.2013 DE 202013101824 U
(43) Veröffentlichungstag der Anmeldung: 29.10.2014
(73) Patentinhaber: Zumtobel Lighting GmbH, 6850 Dornbirn (AT)
(72) Erfinder: Wellmann, Til-Ulirch, 6911 Lochau (AT)
(74) Vertreter: Thun, Clemens

(56) Entgegenhaltungen:
- WO-A1-2005/103556
- WO-A2-2007/113656
- DE-A1-102007 053 399
- DE-A1-102011 100 279
- FR-A1- 2 836 985
- GB-A- 806 124
- US-A1- 2010 208 371

## Beschreibung

Die vorliegende Erfindung betrifft eine Leuchte, welche die Möglichkeit bietet, in einfacher Weise die Lichtabstrahlcharakteristik zu verändern.

Leuchten werden üblicherweise für einen bestimmten Beleuchtungszweck ausgelegt. Dies betrifft zum einen die Farbe und/oder Intensität der Lichtabgabe sowie zum anderen auch die Verteilung des abgegebenen Lichts. Während moderne Leuchten heutzutage die Möglichkeit bieten, die Lichtquellen im Hinblick auf Ihre Intensität und Farbe bzw. Farbtemperatur zu verändern, ist demgegenüber die Richtungsabhängigkeit des abgegebenen Lichts im Wesentlichen nach Montage der Leuchte unveränderbar festgelegt. Es bestehen nur sehr wenige Möglichkeiten, diesbezüglich noch Einfluss auf die Lichtabgabe zu nehmen.

Zwar sind durchaus Lösungen bekannt, bei denen bereits im montierten Zustand der Leuchte noch eine gewisse Einstellung der Richtungsabhängigkeit der Lichtabgabe vorgenommen werden kann, es handelt sich in diesem Fall allerdings dann in der Regel um verhältnismäßig komplexe Konstruktionen, die mechanisch aufwendig sind oder sogar den Einsatz von Elektromotoren oder dergleichen erfordern. Insbesondere bei Leuchten, die ein Lichtaustrittselement aufweisen, welches die Leuchte flächig abschließt, ist ein nachträgliches manuelles Verstellen optischer Elemente und damit ein Beeinflussen der Richtungsabhängigkeit der Lichtabgabe nur schwer möglich.

Die FR 2 836 985 und US2010/0208371 offenbaren Leuchten des Stands der Technik.

Der vorliegenden Erfindung liegt deshalb die Aufgabenstellung zu Grunde, eine neuartige Möglichkeit zu schaffen, mit deren Hilfe in einfacher Weise die Lichtabgabe einer Leuchte im Hinblick auf ihre Richtungsabhängigkeit beeinflusst werden kann.

Die Aufgabe wird durch eine Leuchte mit den Merkmalen des Anspruchs 1 gelöst. Vorteilhafte Weiterbildungen der Erfindung sind Gegenstand der abhängigen Ansprüche.

Die erfindungsgemäße Leuchte weist zunächst eine Lichtquelle sowie ein Lichtaustrittselement auf. Erfindungsgemäß ist zwischen der Lichtquelle und dem Lichtaustrittselement ein optisches Element angeordnet, welches verstellbar ist. Insbesondere kann dieses optische Element verdrehbar gelagert sein, wobei das Verstellen mit Hilfe eines magnetisch wirksamen Stellelements erfolgt. Hierzu ist an dem optischen Element ein magnetisches bzw. ein mit einem Magnet zusammenwirkendes Führungsteil angeordnet, wobei hierdurch die Möglichkeit eröffnet wird, ohne Entfernen des Lichtaustrittselements eine Verstellung des optischen Elements vorzunehmen.

Erfindungsgemäß wird deshalb eine Leuchte mit einer Lichtquelle und einem Lichtaustrittselement vorgeschlagen, wobei zwischen der Lichtquelle und dem Lichtaustrittselement ein optisches Element angeordnet ist, welches verstellbar, insbesondere verdrehbar gelagert ist, und wobei an dem optischen Element ein magnetisches bzw. ein mit einem Magnet zusammenwirkendes Führungsteil angeordnet ist.

Die erfindungsgemäße Lösung gestattet es also, in einfacher Weise bereits im montierten Zustand der Leuchte noch Einfluss auf die Position des optischen Elements zu nehmen. Dadurch, dass das Verstellen des optischen Elements mittels Magnetkraft erfolgt, ist kein unmittelbares Berühren des optischen Elements erforderlich und das Lichtaustrittselement der Leuchte muss dementsprechend nicht entfernt werden. Hierdurch wird in sehr einfacher Weise auch zu einem späteren Zeitpunkt noch die Möglichkeit eröffnet, die Lichtabstrahlcharakteristik einer Leuchte speziellen Bedürfnissen anzupassen.

Erfindungsgemäß bewirkt das optische Element eine asymmetrische Lichtabgabe. Es kann sich hierbei beispielsweise um ein kleines Raster handeln, besonders bevorzugt ist das optische Element jedoch durch eine Prismenplatte gebildet. Im Falle einer Verdrehbarkeit ist hierbei das optische Element um eine Achse verdrehbar, auf der vorzugsweise auch die Lichtquelle angeordnet ist. Das heißt, die Position des optischen Elements bezüglich der Lichtquelle selbst wird nicht verändert, sodass in jeglicher Stellung das optische Element in optimaler Weise das Licht der Lichtquelle weiterleiten bzw. beeinflussen kann.

Erfindungsgemäß liegt das optische Element auf dem Lichtaustrittselement auf, wobei dieses Lichtaustrittselement hinsichtlich seiner Abmessungen entweder dem optischen Element entsprechen, also in etwa gleich groß sein kann, oder auch deutlich größer sein kann. In diesem Fall erfolgt dann in dem Bereich des Lichtaustrittselements, in dem sich das optische Element befindet, die einstellbare, richtungsabhängige Lichtabgabe, während hingegen andere Bereiche des Lichtaustrittselements ggf. zu einer flächigen, nicht beeinflussbaren zusätzlichen Lichtabgabe genutzt werden können.

Zwischen dem optischen Element und der Lichtquelle können darüber hinausgehend auch weitere Lichtbeeinflussungsmittel vorgesehen sein. Denkbar wäre insbesondere die Nutzung eines Reflektors, der sich von der Lichtquelle bis zum dem optischen Element hin erstreckt und derart gestaltet ist, dass das Licht der Lichtquelle in optimierter Weise auf das optische Element gerichtet wird.

Nachfolgend soll die Erfindung anhand der beiliegenden Zeichnung näher erläutert werden. Es zeigen:
- Figuren 1 und 2: Ansichten einer erfindungsgemäß ausgestalteten Leuchte mit einstellbarer Lichtabstrahlcharakteristik und
- Figuren 3a und 3b: beispielhafte Lichtverteilungskurven der erfindungsgemäßen Leuchte abhängig von der Einstellung des optischen Elements.

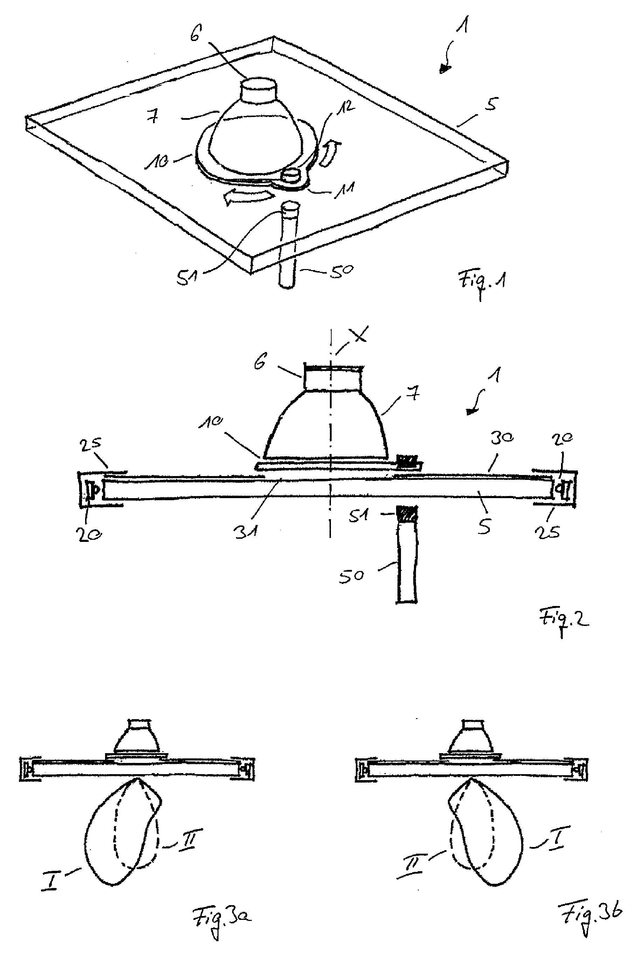

Beispielhaft dargestellt in den Figuren 1 und 2 ist eine Leuchte 1 mit einem flächigen, insbesondere quadratischen Lichtaustrittselement in Form einer Schreibe 5. Die Lichtaustrittsscheibe 5 und die weiteren Komponenten der Leuchte 1 können in einem nicht dargestellten, kastenförmigen Gehäuse angeordnet sein, in gleicher Weise kann es sich allerdings auch um eine Deckeneinbauleuchte handeln, bei der die Lichtaustrittsscheibe 5 bündig mit der Decke abschließt und an der Rückseite der Scheibe 5 dann die weiteren Komponenten angeordnet sind.

Im dargestellten Ausführungsbeispiel soll zunächst über die Lichtaustrittsscheibe 5 flächig Licht zur Unterseite hin abgegeben werden. Die Scheibe 5 ist hierzu als flächiger Lichtleiter ausgerührt, in dessen Stirnseiten das Licht von mehreren LEDs 20 eingekoppelt wird. Die LEDs 20 sind durch seitliche Reflektoren 25 umfasst, durch welche sichergestellt ist, dass das in einen verhältnismäßig großen Winkelbereich abgegebene LED-Licht effizient in die Lichtaustrittsscheibe 5 eingekoppelt wird. In bekannter Weise erfolgt dann durch Mehrfachreflexionen eine Verteilung des Lichts über die gesamte Fläche der Scheibe 5 hinweg, so dass diese mit einer im Wesentlichen gleichmäßigen Helligkeit erscheint. Zur Unterstützung der Reflexionen sind im vorliegenden Fall an der Rückseite der Scheibe 5 reflektierende Bereiche 30 ausgebildet.

Im zentralen Bereich der Scheibe 5 hingegen ist durch die reflektierenden Bereiche 30 eine Öffnung 31 gebildet, über welche eine zusätzliche gerichtete Lichtabgabe erfolgen soll. Hierzu sind an der Rückseite der Scheibe 5 eine weitere Lichteinheit 6 sowie ein dazugehöriger Reflektor 7 angeordnet. Bei der Lichteinheit 6 kann es sich beispielsweise wiederum um eine LED mit dazugehörigem Kühlkörper handeln. Auch andere Lichtquellen, z.B. Halogenlampen oder dergleichen wären denkbar. Mit Hilfe des topfförmigen Reflektors 7 wird das Licht der Lichteinheit 6 dann auf die Öffnung 31 gerichtet, um über die Lichtaustrittsscheibe 5 direkt zur Unterseite hin abgegeben zu werden. Dieses Licht könnte beispielsweise zur Beleuchtung eines Arbeitsplatzes oder dergleichen genutzt werden.

Erfindungsgemäß ist vorgesehen, dass das mit Hilfe der Lichteinheit 6 und dem Reflektor 7 über die Lichtaustrittsscheibe 5 abgegebene Licht eine einstellbare Lichtverteilung aufweist. Dies wird dadurch ermöglicht, dass zwischen Reflektor 7 und der Lichtaustrittsscheibe 5 eine weitere Optik 10 angeordnet ist. Diese scheibenförmige, im Wesentlichen kreisförmige Optik 10 ist im dargestellten Ausführungsbeispiel durch eine Prismenplatte gebildet, welche Prismenstrukturen aufweist, die eine entsprechende Lenkung des hindurchtretenden Lichts bewirken. Insbesondere sind im vorliegenden Fall die Prismen derart ausgebildet, dass eine asymmetrische Lichtabgabe erzielt wird, also die Lichtabgabe in eine bestimmte Richtung hin bevorzugt wird. Alternativ zu einer entsprechenden Prismenscheibe könnte beispielsweise auch ein Mikroraster oder dergleichen zum Einsatz kommen.

Je nach Orientierung der Prismenscheibe wird also eine Lichtabgabe in unterschiedlichen Richtungen erzielt, wie dies beispielsweise den Lichtverteilungskurven der Figuren 3a und 3b entnommen werden kann. Die durchgezogene Linie I, welche die Asymmetrie zeigt, stellt dabei jeweils die Lichtverteilungskurve im Hinblick auf eine bestimmte erste Ebene dar, während hingegen Kurve II die Lichtverteilung in einer zweiten Ebene senkrecht hierzu zeigt, wobei erkennbar ist, dass - beispielsweise bei einer Verdrehung der Prismenscheibe um 180° Grad - sich jeweils entgegengesetzte Lichtverteilungscharakteristiken bezüglich der ersten Ebene ergeben.

Durch die Drehstellung der Prismenscheibe kann also die Lichtabgabe der Leuchte im Hinblick auf den zur direkten Beleuchtung genutzten Lichtanteil beeinflusst werden. Bei aus dem Stand der Technik bekannten Lösungen stellt sich dann allerdings das Problem, dass bei Montage der Leuchte die Stellung der Prismenscheibe festgelegt wird und danach nur noch aufwendig verändert werden kann.

Erfindungsgemäß ist nunmehr bei der vorliegenden Leuchtenkonstruktion vorgesehen, dass die Prismenscheibe 10 drehbar gelagert ist. Sie ist insbesondere um eine Achse X drehbar, auf der auch die Lichteinheit 6 angeordnet ist. Das heißt, unabhängig von der Drehstellung der Prismenscheibe 10 wird das Licht der Lichteinheit 6 mit Hilfe des zusätzlichen Reflektors 7 in optimaler Weise auf die Prismenscheibe 10 gelenkt, sodass diese eine entsprechende Beeinflussung des Lichts vornehmen kann.

Eine Verstellung der Prismenscheibe 10 für den Endverbraucher wird dadurch ermöglicht, dass am Seitenumfang der Scheibe 10 ein Vorsprung 11 ausgebildet ist, an dem ein magnetisch wirksames Führungselement 12 angeordnet ist. Es kann sich bei diesem Führungselement 12 selbst um einen Magneten oder zumindest ein mit einem Magnet zusammenwirkendes Metallteil handeln. Durch Ansetzen eines Verstellelements, bzw. eines Einstellstifts 50 mit einem an seiner Spitze angeordnetem Magneten 51 kann dann in einfacher Weise eine Einstellung der Drehstellung der Prismenscheibe 10 vorgenommen werden. Hierzu muss der Einstellstift 50 lediglich an der Unterseite der Lichtaustrittsscheibe 5 angesetzt werden und dann entlang einer kreisförmigen Führungslinie soweit geführt werden, bis das ihm folgende Element 12 die gewünschte Drehstellung erreicht hat.

Es ist offensichtlich, dass bei dieser Lösung auch im bereits monierten Zustand der Leuchte noch in einfacher Weise eine Anpassung der Lichtabstrahleigenschaften vorgenommen werden kann. Dies wird insbesondere ermöglicht, ohne dass zuvor Teile der Leuchte demontiert werden müssen, um an die zu verstellenden optischen Elemente zu gelangen. Die verstellbare Lagerung der kreisförmigen Prismenscheibe kann dabei in einfacher Weise dadurch erfolgen, dass diese an der Rückseite der Lichtaustrittsscheibe anliegt und mit Hilfe entsprechender Stege oder Vorsprünge in Position gehalten wird, allerdings derart, dass ein Verdrehen ermöglicht wird.

Letztendlich kann also ein einfaches Anpassen der Lichtabstrahleigenschaften vorgenommen werden, wobei sich die Leuchte trotzt allem durch ihren äußerst einfachen Aufbau auszeichnet und dementsprechend die Verstellbarkeit keine aufwendigen Maßnahmen hinsichtlich der Konstruktion der Leuchte erfordert. Selbstverständlich ist dabei das erfindungsgemäße Konzept auch auf Leuchtenkonstruktionen anwendbar, bei denen die Lichtaustrittsscheibe hinsichtlich ihrer Abmessungen im Wesentlichen den Abmessungen des verstellbaren optischen Elements entspricht. Das heißt, es muss nicht - wie bei dem Ausführungsbeispiel der Figuren 1 und 2 - eine deutlich größere Lichtaustrittsscheibe vorgesehen sein, über welche zusätzlich auch noch flächig Licht abgegeben wird.

## Patentansprüche

1. Leuchte (1) mit einer Lichtquelle (6) und einem Lichtaustrittselement (5), wobei zwischen der Lichtquelle (6) und dem Lichtaustrittselement (5) ein scheibenförmiges optisches Element (10) angeordnet ist, welches verstellbar, insbesondere verdrehbar gelagert ist, und wobei an dem optischen Element (10) ein magnetisches bzw. ein mit einem Magnet zusammenwirkendes Führungsteil (12) angeordnet ist, das optische Element (10) liegt auf dem Lichtaustrittselement (5) auf und bewirkt eine asymmetrische Lichtabgabe , **dadurch gekennzeichnet, dass** am Seitenumfang des optischen Elements (10) ein Vorsprung (11) ausgebildet ist, an dem das Führungsteil (12) angeordnet ist.

2. Leuchte nach Anspruch 1,
**dadurch gekennzeichnet,**
**dass** das optische Element (10) eine Prismenstruktur aufweist.

3. Leuchte nach Anspruch 1,
**dadurch gekennzeichnet,**
**dass** das optische Element (10) eine Rasterstruktur aufweist.

4. Leuchte nach einem der vorherigen Ansprüche,
**dadurch gekennzeichnet,**
**dass** das optische Element (10) um eine Achse (X) verdrehbar ist, auf der vorzugsweise auch die Lichtquelle (6) angeordnet ist.

5. Leuchte nach einem der vorherigen Ansprüche,
**dadurch gekennzeichnet,**
**dass** zwischen dem optischen Element (10) und der Lichtquelle (6) weitere Lichtbeeinflussungsmittel, vorzugsweise ein Reflektor (7) angeordnet sind.

6. Leuchte nach einem der vorherigen Ansprüche,
**dadurch gekennzeichnet,**
**dass** das Lichtaustrittselement (5) hinsichtlich seiner Abmessung im Wesentlichen dem optischen Element (10) entspricht.

7. Leuchte nach einem der vorherigen Ansprüche,
**dadurch gekennzeichnet,**
**dass** das Lichtaustrittselement (5) größer als das optische Element (10) ist.

8. Leuchte nach Anspruch 7,
**dadurch gekennzeichnet,**
**dass** über Bereiche des Lichtaustrittselements, die seitlich des optischen Elements (10) liegen, eine weitere Lichtabgabe erfolgt, wobei das Lichtaustrittselement (5) vorzugsweise als flächiger Lichtleiter wirkt.

## Claims

1. Luminaire (1) comprising a light source (6) and a light emission element (5), wherein a disc-shaped optical element (10) is arranged between the light source (6) and the light emission element (5), wherein it is movable, in particular mounted rotatably, and wherein a magnetic or a guide member (12) interacting with a magnet, is arranged on the optical element (10), wherein
the optical element (10) lies on the light emission element (5) and produces an asymmetric light output,
**characterized in that**
a projection (11) is formed on the side periphery of the optical element (10), on which the guide part (12) is arranged.

2. Luminaire according to claim 1,
**characterized in that**
the optical element (10) has a prism structure.

3. Luminaire according to claim 1,
**characterized in that**
the optical element (10) has a grid structure.

4. Luminaire according to one of the preceding claims,
**characterized in that**
the optical element (10) is rotatable about an axis (X), on which the light source (6) is also preferably arranged.

5. Luminaire according to one of the preceding claims,
**characterized in that**
further light influencing means, preferably a reflector (7), are arranged between the optical element (10) and the light source (6).

6. Luminaire according to one of the preceding claims,
**characterized in that**
the light emission element (5) substantially corresponds to the optical element (10) in its dimensions.

7. Luminaire according to one of the preceding claims,
**characterized in that**
the light emission element (5) is larger than the optical element (10).

8. Luminaire according to claim 7,
**characterized in that**
a further light emission results over regions of the light emission element which lie laterally to the optical element (10), wherein the light emission element (5) preferably acts as a planar light guide.

## Revendications

1. Luminaire (1) avec une source de lumière (6) et un élément de sortie de lumière (5), un élément optique en forme de disque (10) étant disposé entre la source de lumière (6) et l'élément de sortie de lumière (5), qui est réglable, plus particulièrement logé de manière rotative et une partie de guidage (12) magnétique ou interagissant avec un aimant étant disposée sur l'élément optique (10), l'élément optique (10) se trouvant sur l'élément de sortie de lumière (5) et provoquant une émission de lumière asymétrique,
**caractérisé en ce que**
sur la circonférence latérale de l'élément optique (10) se trouve une saillie (11) sur laquelle la partie de guidage (12) est disposée.

2. Luminaire selon la revendication 1,
**caractérisé en ce que**
l'élément optique (10) présente une structure prismatique.

3. Luminaire selon la revendication 1,
**caractérisé en ce que**
l'élément optique (10) présente une structure de grille.

4. Luminaire selon l'une des revendications précédentes,
**caractérisé en ce que**
l'élément optique (10) est rotatif autour d'un axe (X) sur lequel de préférence également la source de lumière (6) est disposée.

5. Luminaire selon l'une des revendications précédentes,
**caractérisé en ce que**
entre l'élément optique (10) et la source de lumière (6) se trouvent d'autres moyens de contrôle de la lumière, de préférence un réflecteur (7).

6. Luminaire selon l'une des revendications précédentes,
**caractérisé en ce que**
l'élément de sortie de lumière (5) correspond globalement, en ce qui concerne ses dimensions, à l'élément optique (10).

7. Luminaire selon l'une des revendications précédentes,
**caractérisé en ce que**
l'élément de sortie de lumière (5) est plus grand que l'élément optique (10).

8. Luminaire selon la revendication 7,
**caractérisé en ce que**
des zones de l'élément de sortie de lumière, qui se trouvent sur le côté de l'élément optique (10), permettant une émission de lumière, l'élément de sortie de lumière (5) agissant de préférence comme un guide d'ondes plat.
